# EUROPEAN PATENT APPLICATION

(11) **EP 4 733 608 A1**
(43) Date of publication of application: **29.04.2026**
(21) Application number: 24901762.5
(22) Date of filing: 29.08.2024
(51) Int. Cl.: F16B 21/18, B25B 27/00

(54) **SELF-LOCKING RETAINING RING**

(30) Priority: 21.08.2024 CN 202422026434 U
(71) Applicant: Zhangjiagang Haujoy Machinery Co., Ltd., Suzhou, Jiangsu 215624 (CN)
(72) Inventor: SHEN, Shaoping, Suzhou, Jiangsu 215624 (CN); SUN, Liang, Suzhou, Jiangsu 215624 (CN)
(74) Representative: Metida
(86) International application number: PCT/CN2024/115428
(87) International publication number: WO 2026/040117

(57) **Abstract**

The disclosure belongs to the technical field of high-speed motor accessories, and specifically discloses a self-locking retaining ring including a retaining ring body made of flat steel wires by lateral winding, the retaining ring body has at least two layers, fan-shaped grooves are provided at openings at both ends of the retaining ring body, raised semicircular bosses and elastic pieces are respectively stamped on planes of the flat wires corresponding to lower parts of the fan-shaped grooves, the retaining ring body is provided with a zigzag bend, and the fan-shaped grooves, the semicircular bosses and the elastic pieces are all machined by a stamping die. The retaining ring body of the self-locking retaining ring is firstly sleeved in a taper guide sleeve during installation, and then an elastic multi-claw pressing sleeve is pushed by an air cylinder or an electric cylinder to push the retaining ring body to slide along the taper guide sleeve to a circlip groove shaft and into a circlip groove, so that the retaining ring is finally installed in place, and the whole installation process of the retaining ring can be fully automated, which improves the efficiency, meets the requirements of an automatic production line, and avoids the possibility of damaging the retaining ring during manual installation.

## Description

### TECHNICAL FIELD

The present application relates to the technical field of high-speed motor accessories, in particular to a self-locking retaining ring.

### BACKGROUND

With the increase in the rotating speed of motors used in new energy vehicles and new household appliances, there is a need for a self-locking retaining ring capable of being used at high rotating speed to ensure that the retaining ring can be locked reliably at high rotating speed and high centrifugal force to prevent flying off. In addition, with the improvement in automation of production lines, there is an urgent need for the retaining ring to be quickly installed in place by automated equipment.

The existing self-locking retaining rings disclosed in Chinese patent Nos. CN205715159U and CN219041549U both use a single locking structure, and have the following defects: (1) the locking structure has to be manually detached and then manually installed in the circlip groove during installation, which can not meet the requirements of fast and fully automatic installation of retaining rings on automatic production lines; and (2) due to limited locking performance of the single locking structure at higher rotating speeds, the retaining ring is at risk of deformation and flying off under greater centrifugal force, which cannot meet the requirements of higher rotating speeds.

### SUMMARY

In view of this, the object of the disclosure is to solve the disadvantages of the prior art, and to propose a self-locking retaining ring to solve the problems existing in the prior art.

In order to achieve the above object, the disclosure provides a self-locking retaining ring, including a retaining ring body made of flat steel wires by lateral winding, where the retaining ring body has at least 2 layers, fan-shaped grooves are provided at openings at both ends of the retaining ring body, raised semicircular bosses and elastic pieces are respectively stamped on planes of the flat steel wires corresponding to lower parts of the fan-shaped grooves, and the retaining ring body is provided with a zigzag bend.

Preferably, the fan-shaped grooves, the semicircular bosses and the elastic pieces are all machined by a stamping die; and the fan-shaped grooves, the raised semicircular bosses and the elastic pieces together constitute a bidirectional locking structure.

Preferably, the semicircular bosses are configured to lock tangential deformation of the retaining ring body.

Preferably, the elastic pieces are configured to lock radial deformation of the retaining ring body, so that the retaining ring can be firmly caught in a circlip groove, thus achieving a self-locking action.

Preferably, the zigzag bend can ensure flatness of the whole retaining ring, and can catch the circlip groove in a 360-degree direction.

Compared with the prior art, the disclosure has the following beneficial effects:
1. The retaining ring body of the self-locking retaining ring is firstly sleeved in a taper guide sleeve during installation, and then an elastic multi-claw pressing sleeve is pushed by an air cylinder or an electric cylinder to push the retaining ring body to slide along the taper guide sleeve to a circlip groove shaft and into the circlip groove, so that the retaining ring is finally installed in place, and the whole installation process of the retaining ring can be fully automated, which improves the efficiency, meets the requirements of an automatic production line, and avoids the possibility of damaging the retaining ring during manual installation.
2. The fan-shaped grooves, the raised semicircular bosses and the elastic pieces of the self-locking retaining ring together constitute the bidirectional locking structure, and also lock the tangential deformation and the radial deformation of the retaining ring, so that the retaining ring has a higher locking ability, and the retaining ring can work at a higher rotating speed.

### BRIEF DESCRIPTION OF THE DRAWINGS

FIG. 1 is a schematic diagram of an overall structure of the present application;
FIG. 2 is a schematic diagram of a structure of the present application from another perspective;
FIG. 3 is a schematic view of an elastic multi-claw pressing sleeve used in the present application;
FIG. 4 is a schematic diagram of a taper guide sleeve used in the present application; and
FIG. 5 is a schematic diagram of an entire installation process of the present application.

Reference numerals in the drawings: 1. retaining ring body; 2. fan-shaped groove; 3. elastic piece; 4. semicircular boss; 5. zigzag bend; 6. elastic multi-claw pressing sleeve; 7. taper guide sleeve; and 8. clip groove shaft.

### DESCRIPTION OF THE EMBODIMENTS

The technical solutions in the embodiments of the present application will be clearly and completely described below in conjunction with the accompanying drawings in the embodiments of the present application. Obviously, the described embodiments are only part but not all of the embodiments of the present application. Based on the embodiments of the present application, all other embodiments obtained by those of ordinary skill in the art without creative work shall fall within the protection scope of the present application.

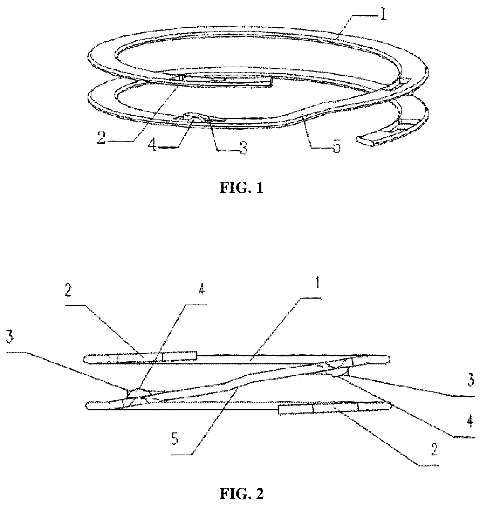

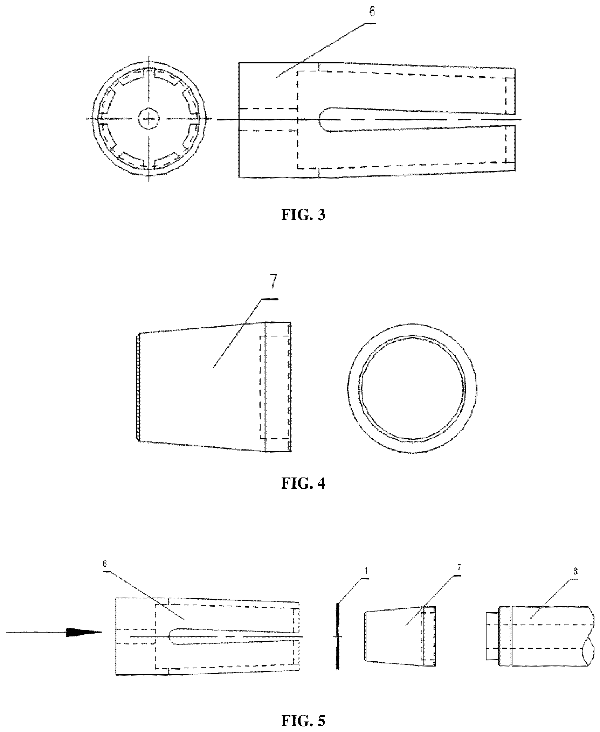

With reference to FIGs. 1-5, a self-locking retaining ring includes a retaining ring body 1 made of flat steel wires by lateral winding, where the retaining ring body 1 has at least 2 layers, fan-shaped grooves 2 are provided at openings at both ends of the retaining ring body 1, raised semicircular bosses 4 and elastic pieces 3 are respectively stamped on planes of the flat steel wires corresponding to lower parts of the fan-shaped grooves 2, and the retaining ring body 1 is provided with a zigzag bend 5.

With the technical solution described above, when installing the retaining ring body 1, the retaining ring body 1 is firstly sleeved in a taper guide sleeve 7, and then an elastic multi-claw pressing sleeve 6 is pushed by an air cylinder or an electric cylinder to push the retaining ring body 1 to slide along the taper guide sleeve 7 to a circlip groove shaft 8 and into a circlip groove, and the retaining ring is finally installed in place, and the whole installation process does not require manual intervention, which meets the requirements of automatic production line installation.

Specifically, the fan-shaped grooves 2, the semicircular bosses 4 and the elastic pieces 3 are all machined by a stamping die.

With the technical solution described above, the semicircular bosses 4 and the elastic pieces 3 formed by the stamping die through blanking and drawing are both standard designs, and are more easily aligned and installed during assembly.

Specifically, the semicircular bosses 4 are configured to lock tangential deformation of the retaining ring body 1.

With the technical solution described above, the semicircular bosses 4 are configured to lock the tangential deformation, which can effectively prevent the retaining ring body 1 from shifting or loosening due to external forces during installation or in use, and resulting firmness greatly improves equipment reliability and stability.

Specifically, the elastic pieces 3 are configured to lock radial deformation of the retaining ring body 1.

With the technical solution described above, the elastic pieces 3 usually have a certain elasticity, which can provide additional support and radial pressure around the retaining ring, and such support force not only helps to maintain the position of the retaining ring, but also reduces instability of the retaining ring due to vibration or load change during operation.

Specifically, the zigzag bend 5 can ensure flatness of the whole retaining ring, and can catch the circlip groove in a 360-degree direction.

With the technical solution described above, the zigzag bend 5 structure can keep the shape of the retaining ring consistent in the 360-degree direction, and this uniformity ensures that the retaining ring can uniformly catch a notch when being installed in the circlip groove, without assembly difficulty or incomplete catching due to inconsistent shape.

Work flow and Principle: When the retaining ring body 1 is installed, an inner diameter of the retaining ring is expanded with the help of a conical sleeve. During the expansion, as the curvature of the semicircular bosses 4 is locked, the elastic pieces 3 also follow the expansion direction, edges of the fan-shaped grooves 2 can smoothly slide through locking positions of the bosses, and the two layers of the retaining ring are separated by the semicircular bosses 4 at the same time, so that the locking structure is released from a locking state. The retaining ring can be smoothly loaded into the circlip groove and locked under the push of a multi-claw push rod along the conical sleeve, and the fan-shaped grooves 2, the raised semicircular bosses 4 and the elastic pieces 3 together constitute a bidirectional locking structure, and also lock the radial deformation and the tangential deformation of an opening of the retaining ring due to centrifugal force. When the retaining ring rotates at a high speed, an opening portion of the retaining ring will be deformed tangentially due to the centrifugal force; when the deformation occurs, the fan-shaped grooves 2 at the opening will contact the semicircular bosses 4, in this case, the fan-shaped grooves 2 will slide along the bosses, causing the opening of the retaining ring to become thicker. However, because the retaining ring is constrained by the circlip groove, the retaining ring is prevented from continuing to become thicker, which achieves tangential locking effect, and the tilted elastic pieces 3 catch lower edges of the fan-shaped grooves 2, preventing the radial deformation of the retaining ring, thus achieving bidirectional locking, thereby enabling the retaining ring to have a higher and stabler performance. The semicircular bosses 4 are designed to effectively lock the tangential deformation of the retaining ring body 1, which means that tangential movement of the retaining ring body 1 in an installation position thereof can be prevented by the bosses even when subjected to an external force, thus keeping the original position thereof unchanged. The elastic pieces 3 are designed to lock the radial deformation of the retaining ring body 1, and this design ensures that the retaining ring can always be maintained in a correct radial position in the installation position thereof, without accidental movement or displacement due to external pressure or vibration. The semicircular bosses 4 and the elastic pieces 3 are combined to form the bidirectional locking structure, and such structural design enables the retaining ring body 1 to be securely caught in a desired position after installation, achieving a self-locking action in terms of tangential movement or the radial deformation. These specifically designed elements can effectively prevent the retaining ring from falling off or moving accidentally.

Although embodiments of the present application have been shown and described, it will be understood by those of ordinary skill in the art that various changes, modifications, substitutions and alterations may be made herein without departing from the principles and spirit of the present application, the scope of which is defined by the appended claims and their equivalents.

## Claims

1. A self-locking retaining ring, comprising a retaining ring body (1) made of flat steel wires by lateral winding, the retaining ring body (1) having at least 2 layers, wherein fan-shaped grooves (2) are provided at openings at both ends of the retaining ring body (1), raised semicircular bosses (4) and elastic pieces (3) are respectively stamped on planes of the flat steel wires corresponding to lower parts of the fan-shaped grooves (2), and the retaining ring body (1) is provided with a zigzag bend (5).

2. The self-locking retaining ring according to claim 1, wherein the fan-shaped grooves (2), the semicircular bosses (4) and the elastic pieces (3) are all machined by a stamping die.

3. The self-locking retaining ring according to claim 1, wherein the semicircular bosses (4) are configured to lock tangential deformation of the retaining ring body (1).

4. The self-locking retaining ring according to claim 1, wherein the elastic pieces (3) are configured to lock radial deformation of the retaining ring body (1).

5. The self-locking retaining ring according to claim 1, wherein the zigzag bend (5) can ensure flatness of the whole retaining ring, and can catch a circlip groove in a 360-degree direction.
